# EUROPEAN PATENT APPLICATION

(11) **EP 2 130 587 A2**
(43) Date of publication of application: **09.12.2009**
(21) Application number: 09251496.7
(22) Date of filing: 05.06.2009
(51) Int. Cl.: B01J 35/00, B01J 27/188, B01D 53/86

(54) **Photocatalyst dispersion liquid and process for producing the same**

(30) Priority: 05.06.2008 JP 2008148404; 14.10.2008 JP 2008265422; 04.02.2009 JP 2009024051
(71) Applicant: Sumitomo Chemical Company, Limited, Tokyo 104-8260 (JP)
(72) Inventor: Sakatani, Yoshiaki, Niihama-shi, Ehime 792-0025 (JP); Okusako, Kensen, Niihama-shi, Ehime 792-0831 (JP); Murata, Makoto, Niihama-shi, Ehime 792-0003 (JP)
(74) Representative: Duckworth, Timothy John

(57) **Abstract**

A photocatalyst dispersion liquid containing titanium oxide particles, tungsten oxide particles, a phosphoric acid or salt thereof and a dispersion medium, wherein the molar amount of the phosphoric acid or salt thereof is from 0.001 to 0.2 times the molar amount of the titanium oxide particles. In this photocatalyst dispersion liquid, the aggregation of the particles is suppressed and thus solid-liquid separation is not easily generated. The photocatalyst dispersion liquid is obtained by a process wherein titanium oxide particles are dispersed in a dispersion medium having a phosphoric acid or salt thereof dissolved therein to obtain a titanium oxide particle dispersion liquid, and then tungsten oxide particles are mixed in the titanium oxide particle dispersion liquid.

## Description

### BACKGROUND

### 1. Field of the Invention

The present invention relates to a photocatalyst dispersion liquid containing titanium oxide particles and tungsten oxide particles, and a process for producing the same.

### 2. Description of Related art

When light having energy higher than the band gap is irradiated to a semiconductor, electrons in a valence band are excited to a conduction band so that positive holes are generated in the valence band and electrons are generated at the conduction band respectively. The positive holes and the electrons respectively have strong oxidizing energy and reducing energy, and thus exert an oxidation and reduction reaction on molecular species in contact with the semiconductor. This oxidation and reduction reaction is called a photocatalytic activity, and a semiconductor which enables to have such the photocatalytic activity is called a photocatalyst.
As for such the photocatalyst, a particle-like photocatalyst such as titanium oxide photocatalyst particles and tungsten oxide photocatalyst particles is known.

Titanium oxide photocatalyst particles and tungsten oxide photocatalyst particles are usually dispersed in a dispersion medium to give a photocatalyst dispersion liquid and the photocatalyst dispersion liquid is used for the formation of a photocatalyst layer. For example, a photocatalyst dispersion liquid obtained by dispersing such the titanium oxide particles and tungsten oxide particles in a dispersion medium is disclosed (Japanese Patent Application Laid-Open No. 2005-231935). By coating this photocatalyst dispersion liquid on a surface of a substrate, a photocatalyst layer containing titanium oxide particles and tungsten oxide particles and having a photocatalytic activity can be easily formed on the surface of the substrate.

### SUMMARY

However, the conventional photocatalyst dispersion liquid obtained by dispersing titanium oxide particles and tungsten oxide particles in a dispersion medium has a problem that the particles are aggregated each other so as to easily generate solid-liquid separation. For example, when particles in the photocatalyst dispersion liquid are aggregated with each other so as to generate solid-liquid separation during transportation or storage of the photocatalyst dispersion liquid, a good film cannot be formed when the photocatalyst layer is formed by coating the dispersion liquid on the substrate. As a result, there arises a problem that sufficient photocatalytic activity cannot be imparted.

An object of the present invention is to provide a photocatalyst dispersion liquid in which the aggregation of particles is suppressed and thus solid-liquid separation is not easily generated, and a process for producing the same.

Present inventors carried out earnest works so as to achieve the above object. As a result, they found out the aggregation of particles is suppressed when a specific amount of a phosphoric acid (salt) is allowed to coexist with respect to titanium oxide particles in a dispersion liquid obtained by dispersing titanium oxide particles and tungsten oxide particles in a dispersion medium.
Also, they found out that the existence of the phosphoric acid (salt) near titanium oxide particles is effective to suppress the aggregation of particles and, in order to obtain a dispersion liquid in which the phosphoric acid (salt) exists near titanium oxide particles, titanium oxide particles are preferably dispersed in a phosphoric acid (salt) solution in advance before titanium oxide particles are mixed with tungsten oxide particles. Thus, the present invention has been completed based on these findings.

That is, the photocatalyst dispersion liquid of the present invention is a photocatalyst dispersion liquid comprising titanium oxide particles, tungsten oxide particles, a phosphoric acid (salt) and a dispersion medium, wherein a containing amount of the phosphoric acid (salt) is from 0.001 mol times to 0.2 mol times with respect to the titanium oxide particles.

The process for producing a photocatalyst dispersion liquid of the present invention comprises steps of dispersing titanium oxide particles in a dispersion medium containing a phosphoric acid (salt) dissolved therein to obtain a titanium oxide particle dispersion liquid; and mixing tungsten oxide particles in the titanium oxide particle dispersion liquid.

The photocatalyst functional product of the present invention is a photocatalyst functional product comprising a photocatalyst layer on a surface, wherein the photocatalyst layer is formed using the photocatalyst dispersion liquid of the present invention.

According to the present invention, it is possible to provide a photocatalyst dispersion liquid in which the aggregation of particles is suppressed and thus solid-liquid separation is not easily generated, and a process for producing the same. Use of this photocatalyst dispersion liquid makes it possible to easily produce a photocatalyst layer which has a high photocatalytic activity.

The above and further objects and features of the invention will more fully be apparent from the following detailed description.

### DETAILED DESCRIPTION

### (Photocatalyst dispersion liquid)

The photocatalyst dispersion liquid of the present invention contains titanium oxide particles, tungsten oxide particles, a phosphoric acid (salt) and a dispersion medium. Namely, the photocatalyst dispersion liquid of the present invention is obtained by dispersing titanium oxide particles and tungsten oxide particles, which serve as a photocatalyst having photocatalytic activity, in a dispersion medium in the presence of a phosphoric acid (salt). At this time, the phosphoric acid (salt) exists near titanium oxide particles becomes a state of being adsorbed on a surface of the titanium oxide particles. Since the titanium oxide particles in this state are not easily aggregated with tungsten oxide particles, the aggregation of particles is suppressed in the photocatalyst dispersion liquid of the present invention. A photocatalyst dispersion liquid in which a phosphoric acid (salt) exists near titanium oxide particles is easily obtained by a process for producing a photocatalyst dispersion liquid of the present invention described hereinafter.

The titanium oxide particles composing the photocatalyst dispersion liquid of the present invention are not particularly limited as long as they are particle-like titanium oxide having a photocatalytic activity and, for example, meta-titanic acid particles or titanium dioxide (TiO₂) particles in which a crystal structure is an anatase type, brookite type or rutile type. The titanium oxide particles can be used independently or by mixing two or more kinds.

For example, the meta-titanic acid particles can be obtained by a process for hydrolyzing a titanyl sulfate aqueous solution with heating.

For example, the titanium dioxide particles can be obtained by (i) a process for adding a base to a titanyl sulfate or titanium chloride aqueous solution without heating so as to obtain a precipitate, and calcining the precipitate, (ii) a process for adding water, an acid aqueous solution, or a basic aqueous solution to a titanium alkoxide so as to obtain a precipitate, and calcining the precipitate, (iii) a process for calcining meta-titanic acid, or the like. The titanium dioxide particles obtained by these processes can have a desired crystal structure such as anatase-type, brookite-type or rutile-type by adjusting a calcining temperature and a calcining time at a time of calcining.

The titanium oxide particles composing the photocatalyst dispersion liquid of the present invention can also be obtained by reacting a titanium compound with a base, and adding ammonia to the obtained product, followed by aging, solid-liquid separation and further calcining of the solid part. In this process, as for the titanium compound, for example, titanium trichloride (TiCl₃), titanium tetrachloride (TiCl₄), titanium sulfate (Ti(SO₄)₂·mH₂O, 0 ≤ m < 20), titanium oxysulfate (TiOSO₄·nH₂O, 0 ≤ n ≤ 20), titanium oxychloride (TiOCl₂), and the like can be used. As the base to be reacted with the titanium compound, for example, sodium hydroxide, potassium hydroxide, sodium carbonate, potassium carbonate, ammonia, hydrazine, hydroxylamine, monoethanolamine, a non-cyclic amine compound, a cyclic aliphatic amine compound, and the like can be used.

The reaction of the titanium compound and the base is carried out at pH 2 or more, preferably pH 3 or more, pH 7 or less, preferably pH 5 or less. The reaction temperature is usually 90°C or lower, preferably 70°C or lower, and more preferably 55°C or lower. The reaction of the titanium compound and the base can be carried out in the presence of hydrogen peroxide so as to improve grindability of the obtained titanium oxide. For example, aging can be carried out by maintaining at a temperature of 0°C or higher, preferably 10°C or higher, 110°C or lower, preferably 80°C or lower, and more preferably 55°C or lower for 1 minute or more, preferably 10 minutes or more, 10 hours or less, preferably 2 hours or less, while stirring the product to which ammonia was added. The total amount of the base (ammonia) used in the reaction and aging can be the amount more than a stoichiometric amount of the base, which requires to convert the titanium compound to titanium hydroxide in the presence of water. Since a photocatalyst having a higher photocatalytic activity by irradiating with a visible light is obtained as the amount of the base increases, the amount of the base is usually 1.1 mol times or more, and more preferably 1.5 mol times or more. Since the effect corresponding to the amount is not exerted even if the amount of the base is too large, the upper limit is preferably 20 mol times or less, and more preferably 10 mol times or less.

Solid-liquid separation of the aged product can be carried out by pressure filtration, filtration under reduced pressure, centrifugal separation, decantation, or the like. In the solid-liquid separation, an operation of washing the obtained solid part is preferably carried out. The solid part obtained by the solid-liquid separation can be usually carried out at a temperature of 250°C or higher, preferably 270°C or higher, 600°C or lower, preferably 500°C or lower, and more preferably 400°C or lower, using an air flow calcining furnace, a tunnel furnace, a rotary furnace, or the like. The calcining time varies depending on the calcining temperature and the kind of the calcining apparatus, but is usually 10 minutes or more, preferably 30 minutes or more for 30 hours or less, and preferably 5 hours or less. If necessary, it is possible to support, on the titanium oxide obtained by calcining, a compound having a solid acidity, such as an oxide or hydroxide of tungsten, niobium, iron, nickel, or the like; compounds having solid basicity, such as oxides and hydroxides of lanthanum, cerium and calcium, and a metal compound capable of absorbing a visible light such as indium oxide, bismuth oxide, or the like.

It is possible to use, as for the titanium oxide particles composing the photocatalyst dispersion liquid of the present invention, in addition to the above titanium oxide particles, titanium oxide particles described in Japanese Patent Application Laid-Open No. 2001-72419, Japanese Patent Application Laid-Open No. 2001-190953, Japanese Patent Application Laid-Open No. 2001-316116, Japanese Patent Application Laid-Open No. 2001-322816, Japanese Patent Application Laid-Open No. 2002-29749, Japanese Patent Application Laid-Open No. 2002-97019, WO 01/10552 pamphlet, Japanese Patent Application Laid-Open No. 2001-212457, Japanese Patent Application Laid-Open No. 2002-239395), WO 03/080244 pamphlet, WO 02/053501 pamphlet, Japanese Patent Application Laid-Open No. 2007-69093, Chemistry Letters, Vol. 32, No. 2, P.196-197 (2003), Chemistry Letters, Vol. 32, No. 4, P.364-365 (2003), Chemistry Letters, Vol. 32, No. 8, P.772-773 (2003), Chem. Mater., 17, P.1548-1552 (2005), and the like. It is also possible to use titanium oxide particles obtained by processes described in Japanese Patent Application Laid-Open No. 2001-278625, Japanese Patent Application Laid-Open No. 2001-278626, Japanese Patent Application Laid-Open No. 2001-278627, Japanese Patent Application Laid-Open No. 2001-302241, Japanese Patent Application Laid-Open No. 2001-335321, Japanese Patent Application Laid-Open No. 2001-354422, Japanese Patent Application Laid-Open No. 2002-29750, Japanese Patent Application Laid-Open No. 2002-47012, Japanese Patent Application Laid-Open No. 2002-60221, Japanese Patent Application Laid-Open No. 2002-193618, Japanese Patent Application Laid-Open No. 2002-249319, and the like.

The particle diameter of the titanium oxide particles is not particularly limited, but is usually from 20 nm to 150 nm, and preferably from 40 nm to 100 nm, in terms of an average dispersed particle diameter from a view point of a photocatalytic activity.

The BET specific surface area of the titanium oxide particles is not particularly limited, but is usually from 100 m²/g to 500 m²/g, and preferably from 300 m²/g to 400 m²/g, from a view point of a photocatalytic activity.

The tungsten oxide particles composing the photocatalyst dispersion liquid of the present invention are not particularly limited as long as they are particle-like tungsten oxide having a photocatalytic activity and are, for example, tungsten trioxide (WO₃) particles. The tungsten oxide particles can be used independently or by mixing two or more kinds.

For example, the tungsten trioxide particles can be obtained by (i) a process for adding an acid to a tungstate aqueous solution so as to obtain tungstic acid as a precipitate, and calcining the tungstic acid, (ii) a process for thermally decomposing ammonium metatungstate or ammonium paratungstate with heating, or the like.

The particle diameter of the tungsten oxide particles is not particularly limited, but is usually from 50 nm to 200 nm, and preferably from 80 nm to 130 nm, in terms of an average dispersed particle diameter from a view point of a photocatalytic activity.

The BET specific surface area of the tungsten oxide particles is not particularly limited, but is usually from 5 m²/g to 100 m²/g, and preferably from 20 m²/g to 50 m²/g, from a view point of a photocatalytic activity

In the photocatalyst dispersion liquid of the present invention, the mass ratio of use amounts of the titanium oxide particles and the tungsten oxide particles (titanium oxide particles:tungsten oxide particles) is usually from 4:1 to 1:8, and preferably from 2:3 to 3:2.

Examples of the phosphoric acid (salt) composing the photocatalyst dispersion liquid of the present invention include phosphoric acid, or its ammonium salt, sodium salt, potassium salt, and the like. Among these, ammonium phosphates such as ammonium dihydrogen phosphate, diammonium hydrogenphosphate, and the like are particularly preferred. The phosphoric acids (salts) can be used independently or by mixing two or more kinds.

In the photocatalyst dispersion liquid of the present invention, the containing amount of the phosphoric acid (salt) is from 0.001 mol times to 0.2 mol times, and preferably from 0.01 mol times or more and 0.1 mol times or less, with respect to the titanium oxide particles. When the containing amount of the phosphoric acid (salt) is less than 0.001 mol times, it is impossible to sufficiently suppress the aggregation of particles in the dispersion liquid. In contrast, since the effect corresponding to the amount cannot be exerted even when the containing amount of the phosphoric acid (salt) is more than 0.2 mol times, it becomes economically disadvantageous.

The dispersion medium composing the photocatalyst dispersion liquid of the present invention is not particularly limited as long as it is a solvent which dissolves the phosphoric acid (salt), and an aqueous solvent containing water as a main component is usually used. Specifically, the dispersion medium can be water independently, or a mixed solvent of water and a water-soluble organic solvent. When the mixed solvent of water and a water-soluble organic solvent is used, the containing amount of water is preferably 50% by mass or more. Examples of the water-soluble organic solvent include a water-soluble alcohol solvent such as methanol, ethanol, propanol, butanol, or the like, acetone, methyl ethyl ketone, and the like. The dispersion media can be used independently or by mixing two or more kinds.

The containing amount of the dispersion medium is usually from 5 mass times to 200 mass times, and preferably from 10 mass times to 100 mass times, based on the total amount of the titanium oxide particles and the tungsten oxide particles. When the containing amount of the dispersion medium is less than 5 mass times, the titanium oxide particles and the tungsten oxide particles are likely to be aggregated. In contrast, when the containing amount of the dispersion medium is more than 200 mass times, it becomes disadvantageous from a view point of a volume efficiency. Thus, both cases are not preferred.

The photocatalyst dispersion liquid of the present invention preferably contains an electron-withdrawing substance or its precursor. The electron-withdrawing substance is a compound which is supported on a surface of a photocatalyst (i.e., titanium oxide particles and tungsten oxide particles) so as to exert electron-withdrawing property, while the precursor of the electron-withdrawing substance is a compound (for example, a compound which can be reduced to an electron-withdrawing substance through irradiation of light) which can convert to an electron-withdrawing substance on the surface of a photocatalyst. The photocatalytic activity can be more increased by supporting the electron-withdrawing substance on the surface of the photocatalyst and thereby suppressing the recombination of electrons and positive holes, where the electrons are excited at the conduction band and the positive holes are generated at the valence band by irradiation of light.

The electron-withdrawing substance or its precursor preferably contains one or more atoms of metal selected from a group consisting of Cu, Pt, Au, Pd, Ag, Fe, Nb, Ru, Ir, Rh and Co, and more preferably contains one or more atoms of metal selected from a group consisting of Cu, Pt, Au and Pd. Examples of the electron-withdrawing substance include metal of the metal atoms, or oxides or hydroxides of these metals. Examples of the precursor of the electron-withdrawing substance include nitrates, sulfates, halides, organic acid salts, carbonates and phosphates of metals of the metal atoms.

Preferred specific examples of the electron-withdrawing substance include metals such as Cu, Pt, Au, Pd, and the like. Preferred specific examples of the precursor of the electron-withdrawing substance include precursors containing copper, such as copper nitrate (Cu(NO₃)₂), copper sulfate (CUSO₄), copper chloride (CuCl₂, CuCl), copper bromide (CuBr₂, CuBr), copper iodide (CuI), copper iodate (CuI₂O₆), copper ammonium chloride (Cu(NH₄)₂Cl₄), copper oxychloride (Cu₂Cl(OH)₃), copper acetate (CH₃COOCu, (CH₃COO)₂Cu), copper formate ((HCOO)₂Cu), copper carbonate (CuCO₃), copper oxalate (CuC₂O₄), copper citrate (Cu₂C₆H₄O₇), copper phosphate (CuPO₄), and the like; precursors containing platinum, such as platinum chloride (PtCl₂, PtCl4), platinum bromide (PtBr₂, PtBr₄), platinum iodide (PtI₂, PtI₄), potassium platinum chloride (K₂(PtCl₄)), hexachloro platinic acid (H₂PtCl₆), platinum sulfite (H₃(Pt(SO₃)₂OH), platinum oxide (PtO₂), tetrammine platinum chloride (Pt(NH₃)₄Cl₂), tetrammine platinum hydrogencarbonate (C₂H₁₄N₄O₆Pt), tetrammine platinum hydrogenphosphate (Pt(NH₃)₄HPO₄), tetrammine platinum hydroxide (Pt(NH₃)₄(OH)₂), tetrammine platinum nitrate (Pt(NO₃)₂(NH₃)₄), tetrammine platinum tetrachloroplatinum ((Pt(NH₃)₄)(PtCl₄)), and the like; precursors containing Au, such as gold chloride (AuCl), gold bromide (AuBr), gold iodide (AuI), gold hydroxide, (Au(OH)₂), hydrogen tetrachloroaurate (HAuCl₄), potassium tetrachlorochloroaurate (KAuCl₄), potassium tetrabromochloroaurate (KAuBr₄), gold oxide (Au₂O₃), and the like; and precursors containing palladium, such as palladium acetate ((CH₃COO)₂Pd), palladium chloride (PdCl₂), palladium bromide (PdBr₂), palladium iodide (PdI₂), palladium hydroxide (Pd(OH)₂), palladium nitrate (Pd(NO₃)₂) palladium oxide (PdO), palladium sulfate (PdSO₄), potassium tetrachloropalladium acid (K₂(PdCl₄)), potassium tetrabromopalladium acid (K₂(PdBr₄)), tetraamminepalladium chloride (Pd(NH₃)₄Cl₂), tetraamminepalladium bromide (Pd(NH₃)₄Br₂), tetraamminepalladium nitrate (Pd(NH₃)₄(NO₃)₂), tetraammine palladium tetrachloropalladate ((Pd(NH₃)₄)(PdCl₄)), ammonium tetrachloropalladate ((NH₄)₂PdCl₄)), and the like. These electron-withdrawing substances or these precursors can be used independently or by mixing two or more kinds. As a matter of course, one or more kinds of electron-withdrawing substances and one or more kinds of precursors can also be used in combination.

When the electron-withdrawing substance or its precursor is contained, the containing amount is usually from 0.005 parts by mass to 0.6 parts by mass, preferably from 0.01 parts by mass to 0.4 parts by mass, in terms of the metal atom with respect to the total amount of 100 parts by mass of the titanium oxide photocatalyst particles and the tungsten oxide photocatalyst particles. When the containing amount is less than 0.005 parts by mass, the photocatalytic activity by the use of the electron-withdrawing substance is not sufficiently improved. In contrast, when the containing amount is more than 0.6 parts by mass, the photocatalytic activity may deteriorate.

The photocatalyst dispersion liquid of the present invention can contain conventionally known various additives as long as the effects of the present invention are not adversely affected. The additives can be used independently or by mixing two or more kinds.

As for the additive, for example, a material added for improving the photocatalytic activity can be used. Specific examples of the material added for improving the photocatalytic activity include a silicon compound such as amorphous silica, silica sol, water glass, organopolysiloxane or the like, an aluminum compound such as amorphous alumina, alumina sol, an aluminum hydroxide or the like, an aluminosilicate such as zeolite, kaolinite or the like, an alkali earth metal oxide or an alkali earth metal hydroxide such as magnesium oxide, calcium oxide, strontium oxide, barium oxide, magnesium hydroxide, calcium hydroxide, strontium hydroxide, barium hydroxide or the like, calcium phosphate, molecular sieve, active carbon, a polycondensation product of an organopolysiloxane compound, phosphate, a fluorine-based polymer, a silicon-based polymer, an acrylic resin, a polyester resin, a melamine resin, an urethane resin, an alkyd resin, or the like.

Further, a binder can be used, and this binder is for more strongly holding the photocatalyst particles (the titanium oxide photocatalyst particles and the tungsten oxide photocatalyst particles) on the surface of a substrate when coating the photocatalyst dispersion liquid on the surface of the substrate (for example, refer to Japanese Patent Application Laid-Open No. 8-67835, Japanese Patent Application Laid-Open No. 9-25437, Japanese Patent Application Laid-Open No. 10-183061, Japanese Patent Application Laid-Open No. 10-183062, Japanese Patent Application Laid-Open No. 10-168349, Japanese Patent Application Laid-Open No. 10-225658, Japanese Patent Application Laid-Open No. 11-1620, Japanese Patent Application Laid-Open No. 11-1661, Japanese Patent Application Laid-Open No. 2004-059686, Japanese Patent Application Laid-Open No. 2004-107381, Japanese Patent Application Laid-Open No. 2004-256590, Japanese Patent Application Laid-Open No. 2004-359902, Japanese Patent Application Laid-Open No. 2005-113028, Japanese Patent Application Laid-Open No. 2005-230661, Japanese Patent Application Laid-Open No. 2007-161824).

The hydrogen ion concentration of the photocatalyst dispersion liquid of the present invention is usually from pH 2.0 to pH 7.0, and preferably from pH 3.0 to pH 6.0. When the hydrogen ion concentration has pH of less than 2.0, acidity is too strong, and thus the liquid is hardly handled. In contrast, when the hydrogen ion concentration has pH of more than 7.0, the tungsten oxide photocatalyst particles may be dissolved. Thus, both cases are not preferred. The hydrogen ion concentration of the photocatalyst dispersion liquid can be usually adjusted by adding an acid. Examples of the acid used to adjust the hydrogen ion concentration include nitric acid, hydrochloric acid, sulfuric acid, phosphoric acid, formic acid, acetic acid, oxalic acid, and the like.

### (Process for producing photocatalyst dispersion liquid)

According to the process for producing a photocatalyst dispersion liquid of the present invention, titanium oxide particles are dispersed in a dispersion medium containing a phosphoric acid (salt) dissolved therein and the obtained titanium oxide particle dispersion liquid and tungsten oxide particles are mixed. As described above, when the titanium oxide particles are dispersed in the dispersion medium containing the phosphoric acid (salt) dissolved therein before the titanium oxide particles are mixed with tungsten oxide particles, a surface of the titanium oxide particles becomes a state where the phosphoric acid (salt) is adsorbed. Since the titanium oxide particles in this state are not easily aggregated with tungsten oxide particles, the aggregation of particles is suppressed in the photocatalyst dispersion liquid of the present invention.

When a titanium oxide particle dispersion liquid is obtained by dispersing titanium oxide particles in a dispersion medium containing a phosphoric acid (salt) dissolved therein, both are preferably subjected to a dispersing treatment after mixing. In the dispersing treatment, for example, a conventionally known process such as a process using a medium stirring type dispersing device can be employed. In the case of preparing a phosphoric acid (salt)-containing dispersion medium in which titanium oxide particles are dispersed, the use amount of the phosphoric acid (salt) can be adjusted within a range of the containing amount of the phosphoric acid (salt) mentioned in the item of (Photocatalyst dispersion liquid).

The tungsten oxide particles can be mixed in the titanium oxide particle dispersion liquid as they are, but are preferably mixed in the titanium oxide particle dispersion liquid after dispersing in a dispersion medium to form a tungsten oxide particle dispersion liquid. When the tungsten oxide particles are dispersed in the dispersion medium, both are preferably subjected to a dispersing treatment after mixing. In the dispersing treatment, for example, a conventionally known process such as a process using a medium stirring type dispersing device can be employed.

When the titanium oxide particle dispersion liquid and the tungsten oxide particle dispersion liquid are mixed, the dispersion medium used in both dispersion liquids may be the same or different as long as the dispersion medium after mixing is the same as that mentioned in the item of (Photocatalyst dispersion liquid). The use amount of the dispersion medium in both dispersion liquids is not particularly limited as long as the containing amount of the dispersion medium in the finally obtained photocatalyst dispersion liquid is within the range mentioned in the item of (Photocatalyst dispersion liquid).

When the titanium oxide particle dispersion liquid and the tungsten oxide particles are mixed, the use amounts of both can be adjusted so that the ratio of the titanium oxide particles and the tungsten oxide particles is within the range mentioned in the item of (Photocatalyst dispersion liquid).

The process for producing a photocatalyst dispersion liquid of the present invention preferably includes a step of adding an electron-withdrawing substance or its precursor. The electron-withdrawing substance or its precursor can be added to the titanium oxide particle dispersion liquid, or the tungsten oxide particle dispersion liquid, or the dispersion liquid after mixing the titanium oxide particle dispersion liquid with the tungsten oxide particle dispersion liquid or the tungsten oxide particles. From a view point of obtaining a high photocatalytic activity, the electron-withdrawing substance or its precursor is preferably added to the tungsten oxide particle dispersion liquid.

When the electron-withdrawing substance or its precursor is added, the addition amount can be adjusted so that the containing amount of the electron-withdrawing substance or its precursor in the finally obtained photocatalyst dispersion liquid is within the range mentioned in the item of (Photocatalyst dispersion liquid).

When the precursor of the electron-withdrawing substance is added, light-irradiation can be carried out after the addition. A light to be irradiated is a visible light or an ultraviolet light. By carrying out the light-irradiation, the precursor is reduced by electrons generated by photoexitation to form an electron-withdrawing substance, which is supported on a surface of photocatalyst particles (titanium oxide particles and tungsten oxide particles). When the precursor is added, since the precursor is converted to the electron-withdrawing substance at the time when a photocatalyst layer formed of the obtained photocatalyst dispersion liquid is irradiated with light even when light-irradiation is not carried out, the photocatalyst activity does not deteriorate.

The Light-irradiation can be carried out at any stage after the addition of the precursor, but is preferably carried out before mixing the tungsten oxide particles in the titanium oxide particle dispersion liquid.

When the precursor of the electron-withdrawing substance is added, it is possible to appropriately add methanol, ethanol, oxalic acid, or the like before light-irradiation for the purpose of efficiently obtaining the electron-withdrawing substance as long as the effects of the present invention are not adversely affected.

In the process for producing a photocatalyst dispersion liquid of the present invention, various additives mentioned in the item of (Photocatalyst dispersion liquid) can be added. In that case, the additives can be added at any stage. For example, the additives are preferably added after mixing the titanium oxide particle dispersion liquid with the tungsten oxide particle dispersion liquid or the tungsten oxide particles.

### (Photocatalyst functional products)

Photocatalyst functional products of the present invention comprise a photocatalyst layer formed using the photocatalyst dispersion liquid of the present invention on a surface. The photocatalyst layer comprises a photocatalyst having a photocatalytic activity, namely, titanium oxide particles and tungsten oxide particles. When the photocatalyst dispersion liquid of the present invention contains an electron-withdrawing substance or its precursor, the electron-withdrawing substance or its precursor is supported on a surface of the titanium oxide particles and the tungsten oxide particles. The supported precursor is transited to electron-withdrawing substance by irradiating with light.

The photocatalyst layer can be formed, for example, by a conventionally known film forming process of coating the photocatalyst dispersion liquid of the present invention on a surface of a substrate (product) and volatilizing a dispersion medium. The film thickness is not particularly limited and can be properly selected and formed to be several hundred nm to several mm according to the purposes. The photocatalyst layer can be formed on any portion among the inner surface and outer surface of the substrate (product). For example, the photocatalyst layer is preferably formed on the surface to which light (visible light) is irradiated and which is continuously or intermittently, and spatially connected with a part generating a malodorous substance. The material of the substrate (product) is not particularly limited as long as it can hold a photocatalyst layer to be formed with the strength that can be equal to practical use. For example, the material can be applied for products made of all materials including plastics, metal, ceramics, wood, concrete, paper and the like.

Specific examples of the photocatalyst functional product of the present invention include materials for buildings (a ceiling material, a tile, glass, a wall paper, a wall material, a floor, etc.), interior materials for cars (an instrument panel for cars, a sheet for cars, a ceiling material for cars, etc.), household electrical appliances (a refrigerator, an air conditioner, etc.), and textile products (clothing, curtain, etc.).

The photocatalyst functional product of the present invention has high photocatalytic activity by light irradiation under an indoor environment irradiated only with light irradiation from a visible light source such as a fluorescent light or a sodium lamp, not to mention an outdoor environment. Therefore, when the photocatalyst dispersion liquid of the present invention is coated and dried on the ceiling material, tile or glass of hospitals, the concentrations of volatile organic substances such as formaldehyde and acetaldehyde; malodorous substances such as aldehydes, mercaptans and ammonia; and nitrogen oxides can be reduced by light irradiation from indoor lighting, and also pathogenic bacteria such as staphylococcus aureus, coliform bacillus, or the like could be killed.

The present invention will be described in detail below with examples, but the present invention is not limited to these examples.

The measurement of physical properties in Examples and Comparative Examples as well as evaluation of photocatalytic activity were carried out by the following methods.

### (Crystal structure)

An X-ray diffraction spectrum was measured using an X-ray diffraction apparatus ("RINT 2000/PC" produced by Rigaku Corporation), and a crystal structure was determined from the spectrum.

### (BET specific surface area)

A BET specific surface area was measured by a nitrogen adsorbing method using a specific surface area measuring apparatus ("MONOSORB" produced by Yuasa Ionics Inc.).

### (Average dispersed particle diameter)

A particle size distribution was measured using a submicron particle size distribution measuring apparatus ("N4 Plus" produced by Beckman Coulter, Inc.), and automatically analyzed with a monodispersion mode by a software attached to this apparatus.
The result was made to be an average dispersed particle diameter (nm).

### (Evaluation of photocatalytic activity: Decomposition of acetaldehyde)

A photocatalytic activity was evaluated by measuring a first-order rate constant in a decomposition reaction of acetaldehyde under irradiation of light from a fluorescent lamp.

First, a sample for the measurement of a photocatalytic activity was made. The photocatalyst dispersion liquid obtained was dropped in a glass petri dish (having an outer diameter of 70 mm, an inner diameter of 66 mm, a height of 14 mm, and a capacity of about 48 mL) so that the dropping amount in terms of the solid part per an unit area of a bottom face was to be 1 g/m², and the dropped liquid was developed so as to be uniform on the whole bottom face of the petri dish. Then, a photocatalyst layer was formed on the bottom face of the glass petri dish by drying the liquid for 1 hour under an atmosphere in a dryer at 110°C. A sample for the measurement of a photocatalytic activity was obtained by irradiating an ultraviolet light from a black light to the photocatalyst layer for 16 hours so as to have the ultraviolet light strength of 2 mW/cm².

The decomposing reaction of acetaldehyde was carried out by taking the sample for the measurement of a photocatalytic activity into a gas bag (having an inner capacity of 3 L), sealing the bag, making the inside of the gas bag to be a vacuum state, enclosing a mixed gas of 1.8 L in which a volume ratio of oxygen and nitrogen was 1:4 in the gas bag, enclosing a nitrogen gas of 9 mL containing acetaldehyde by 1 volume % in the gas bag, keeping it in a dark space at a room temperature for 1 hour, and setting the gas bag so that an illuminance near the measuring sample from a commercial white fluorescent light as a light source was to be 1,000 lux (measured by an illuminometer "T-10" produced by Konica Minolta Holdings, Inc.). The strength of an ultraviolet light near the measuring sample was 6.5 µW/cm² (measured by using an ultraviolet intensity meter "UVR-2" produced by Topcon Corporation in which a light receiving part "UD-36" produced by the same corporation to the meter was attached). The gas in the gas bag was sampled every 1.5 hours after irradiating a fluorescent light, the residual concentration of acetaldehyde was measured by a gas chromatograph ("GC-14A" produced by Shimadzu Corporation) so as to calculate a first-order rate constant from a decreasing amount of the acetaldehyde concentration with respect to the irradiation time. The calculated first-order rate constant was to be an acetaldehyde decomposing ability. When the first-order rate constant is greater, the acetaldehyde decomposing ability (i.e. photocatalytic activity) is greater.

### (Evaluation of photocatalytic activity: Decomposition of formaldehyde)

A photocatalytic activity was evaluated by measuring a first-order rate constant in a decomposition reaction of formaldehyde under irradiation of light from a fluorescent lamp.

First, a sample for the measurement of a photocatalytic activity was made. The photocatalyst dispersion liquid obtained was dropped in a glass petri dish (having an outer diameter of 70 mm, an inner diameter of 66 mm, a height of 14 mm, and a capacity of about 48 mL) so that the dropping amount in terms of the solid part per an unit area of a bottom face was to be 1 g/m², and the dropped liquid was developed so as to be uniform on the whole bottom face of the petri dish. Then, a photocatalyst layer was formed on the bottom face of the glass petri dish by drying the liquid for 1 hour under an atmosphere in a dryer at 110°C. A sample for the measurement of a photocatalytic activity was obtained by irradiating an ultraviolet light from a black light to the photocatalyst layer for 16 hours so as to have the ultraviolet light strength of 2 mW/cm².

The decomposing reaction of formaldehyde was carried out by taking the sample for the measurement of a photocatalytic activity into a gas bag (having an inner capacity of 1 L), sealing the bag, making the inside of the gas bag to be a vacuum state, enclosing 0.12 L of oxygen in the gas bag, enclosing a nitrogen gas of 0.48 L containing formaldehyde by 100 ppm in the gas bag, keeping it in a dark space at a room temperature for 45 minutes, and setting the gas bag so that an illuminance near the measuring sample from a commercial white fluorescent light as a light source was to be 6,000 lux (measured by an illuminometer "T-10" produced by Konica Minolta Holdings, Inc.). The strength of an ultraviolet light near the measuring sample was 40 µW/cm² (measured by using an ultraviolet intensity meter "UVR-2" produced by Topcon Corporation in which a light receiving part "UD-36" produced by the same corporation to the meter was attached). The gas in the gas bag was sampled every 15 minutes after irradiating a fluorescent light, the residual concentration of formaldehyde was measured by a gas chromatograph ("Agilent 3000 Micro GC" produced by Agilent Technologies) so as to calculate a first-order rate constant from a decreasing amount of the formaldehyde concentration with respect to the irradiation time. The calculated first-order rate constant was to be a formaldehyde decomposing ability. When the first-order rate constant is greater, the formaldehyde decomposing ability (i.e. photocatslytic activity) is greater.

### (Production Example 1 - Preparing of titanium oxide particle dispersion liquid)

In a reaction vessel equipped with a pH electrode and a pH controller having a mechanism of controlling the pH to a set value by supplying 25% by mass ammonia water connected to the pH electrode (in the reaction vessel, ammonia water begins to be supplied when the pH of a liquid in the vessel decreases to the value lower than the set value, and ammonia water is continuously supplied until the pH reaches the set value), 30 kg of ion-exchanged water was charged and thus the set value of the pH controller was set to pH 4. Separately, a mixed solution was prepared by dissolving 75 kg of titanium oxysulfate in 50 kg of ion-exchanged water, and adding 30 kg of 35% hydrogen peroxide water to the aqueous solution under cooling. This mixed solution was added in the reaction vessel at a rate of 530 mL/min while stirring the inside of the reaction vessel at 42 rpm, and then reacted with ammonia water to be supplied to the reaction vessel by the pH controller. At this time, a reaction temperature (an inner temperature of the reaction vessel) was within a range from 20°C to 30°C. After completion of the addition of the mixed solution, the solution was maintained for 1 hour while stirring the inside of the reaction vessel and 25% by mass ammonia water was added to obtain a slurry-like product. The slurry-like product was filtered and then rinsed to obtain a solid (cake). The total amount of.the ammonia water supplied to the reaction vessel was 90 kg and was two times with respect to a theoretical amount required to convert titanium oxysulfate to titanium hydroxide.

After the solid (cake) obtained above was separately charged in 12 stainless steel vats (30 cm × 40 cm) by 2.3 kg, 12 vats were placed in a box-shaped dryer ("Supertemp Oven HP-60" having an inner volume of 216 liter produced by Asahi Kagaku Co., Ltd.) and then dried by maintaining under a dry air flow at a flow rate of 40 m³/hr at 115°C for 5 hours, followed by maintaining at 250°C for 5 hours to obtain a dry powder having a BET specific surface area of 18.0 m²/g. At this time, a maximum water vapor partial pressure in the dryer was 27.4 kPa. The dry powder was calcined under an air atmosphere at 350°C for 2 hours calcining and then cooled to a room temperature to obtain a titanium oxide powder in a total amount of 22 kg as a particle-like photocatalyst.

Next, 950 g of ammonium dihydrogen phosphate (Wako analytical grade reagent) was dissolved in 87.6 kg of ion-exchanged water and 22 kg of the titanium oxide powder obtained above was added to obtain a mixture. A titanium oxide particle dispersion liquid was obtained by subjecting the mixture to a dispersing treatment under the following conditions using a medium stirring type dispersing device ("Model DYNOMILL KDL-PILOT A", produced by Sinmal Enterprises Corporation).

Dispersion medium: 4.2 kg beads made of zirconia having an outer diameter of 0.3 mm
Treating temperature: 20°C
Total treating time: about 240 minutes
Stirring rate: 8 m/sec. at a circumferential speed
Flowing rate: 2 L/min
Circulation of treating solution: carried out

Furthermore, the titanium oxide particle dispersion liquid obtained above was subjected to a second dispersing treatment under the following conditions using a medium stirring type dispersing device ("ULTRAAPEX MILL UAM-5" produced by Kotobuki Engineering & Manufacturing Co., Ltd.).

Dispersion medium: 13 kg beads made of zirconia having an outer diameter of 0.05 mm
Treating temperature: 20°C
Total treating time: about 400 minutes
Rotating rate: 2,000 rpm
Flowing rate: 1 L/min
Circulation of treating solution: carried out

A containing amount of ammonium phosphate in the titanium oxide particle dispersion liquid was 0.03 mol times with respect to the titanium oxide particles. The dispersion liquid obtained above was subjected to centrifugal separation to remove coarse particles. As a result, the average dispersed particle diameter was 84 nm. The solid part concentration of the dispersion liquid was adjusted to 10% by mass by adding water. As a result, the dispersion liquid had a pH value of 6.9. When X-ray diffraction spectra of the mixture before the dispersing treatment and the solid part of the titanium oxide photocatalyst dispersion liquid after the dispersing treatment (the above second dispersing treatment) were measured and compared, both the crystal structures were anatase, and the change of the crystal structure due to the dispersing treatment was not observed.

### (Production Example 2 - Preparing of tungsten oxide particle dispersion liquid)

Tungsten oxide particles were obtained by calcining ammonium paratungstate (produced by NIPPON INORGANIC COLOUR & CHEMICAL CO., LTD.) at 700°C for 6 hours in air.

A mixture was obtained by adding 1 kg of the tungsten oxide particles to 4 kg of ion-exchanged water, followed by mixing. A tungsten oxide photocatalyst dispersion liquid was obtained by subjecting the mixture to a dispersing treatment under the following conditions using a medium stirring type dispersing device (ULTRA APEX MILL UAM-1, produced by Kotobuki Engineering & Manufacturing Co., Ltd.).

Dispersion medium: 1.85 kg beads made of zirconia having an outer diameter of 0.05 mm
Stirring rate: 12.6 m/sec. at a circumferential speed
Flowing rate: 0.25 L/min
Total treating time: about 50 minutes

The average dispersed particle diameter of the tungsten oxide particles in the tungsten oxide particle dispersion liquid was 114 nm. The solid part concentration of the dispersion liquid was adjusted to 10% by mass by adding water. As a result, the dispersion liquid had a pH value of 3.0. The solid part obtained by vacuum-drying a part of the dispersion liquid had a BET specific surface area of 34 m²/g. When X-ray diffraction spectra of the mixture before the dispersing treatment and the solid part of the titanium oxide photocatalyst dispersion liquid after the dispersing treatment were measured and compared, the crystal structure of both solid parts was WO₃, and the change of the crystal structure due to the dispersing treatment was not observed.

### (Example 1)

A photocatalyst dispersion liquid was prepared by mixing the titanium oxide particle dispersion liquid obtained in Production Example 1 with the tungsten oxide particle dispersion liquid obtained in Production Example 2 so that the use amount ratio of the titanium oxide particles and the tungsten oxide particles was to be 1:1 (at mass ratio). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.8.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.095 h⁻¹.

### (Comparative Example 1)

A photocatalyst dispersion liquid was prepared by a similar process to that of Example 1 except a commercial titanium oxide particle dispersion liquid ("STS-01", produced by Ishihara Sangyo Kaisha Ltd., containing nitric acid, and having an average dispersed particle diameter of 50 nm) was used instead of the titanium oxide particle dispersion liquid obtained in Production Example 1. An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 1.9.

When the photocatalyst dispersion liquid was stored at 20°C for 3 hours, aggregated particles were produced during the storage and solid-liquid separation was generated.

### (Example 2)

The titanium oxide particle dispersion liquid obtained in Production Example 1 and the tungsten oxide particle dispersion liquid obtained in Production Example 2 were mixed so that the use amount ratio of the titanium oxide particles and the tungsten oxide particles was to be 1:1 (at mass ratio). Then, an aqueous solution of hexachloro platinic acid (H₂PtCl₆) was added to the mixture so that the use amount of hexachloro platinic acid was 0.03 parts by mass in terms of the platinum atom with respect to 100 parts by mass of the total use amount of the titanium oxide particles and the tungsten oxide particles. Furthermore, methanol was added so that the concentration was 5% by mass with respect to the entire solvent to obtain a photocatalyst dispersion liquid. An amount of the solid part (a total amount of the titanium oxide particles and the tungsten oxide particles) in 100 parts by mass of the photocatalyst dispersion liquid was 5 parts by mass (having a solid part concentration of 5% by mass).

When the photocatalyst dispersion liquid was stored at 20°C for 3 hours, no solid-liquid separation was observed during the storage.

Furthermore, 30 g of the photocatalyst dispersion liquid was transferred to a 100 mL beaker and irradiated with an ultraviolet light for 2 hours by an ultrahigh pressure mercury lamp (produced by Ushio Inc., lamp house: "MPL-25101", an ultrahigh pressure mercury lamp: "USH-250BY", a lamp power source: "HB-25103BY") while stirring, thus reducing hexachloro platinic acid in the photocatalyst dispersion liquid to platinum to obtain a photocatalyst dispersion liquid. The photocatalyst dispersion liquid after irradiation of the ultraviolet light had a pH value of 4.6.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.129 h⁻¹.

### (Example 3)

A photocatalyst dispersion liquid was obtained by a similar process to that of Example 2 except the use amount of the aqueous solution of hexachloro platinic acid (H₂PtCl₆) was 0.06 parts by mass in terms of the platinum atom with respect to 100 parts by mass of the total use amount of the titanium oxide particles and the tungsten oxide particles. An amount of the solid part (a total amount of the titanium oxide particles and the tungsten oxide particles) in 100 parts by mass of the photocatalyst dispersion liquid was 5 parts by mass (having a solid part concentration of 5% by mass).

When the photocatalyst dispersion liquid was stored at 20°C for 3 hours, no solid-liquid separation was observed during the storage.

Furthermore, 30 g of the photocatalyst dispersion liquid was transferred to a 100 mL beaker and irradiated by a similar process to that of Example 2, thus reducing hexachloro platinic acid in the photocatalyst dispersion liquid to platinum to obtain a photocatalyst dispersion liquid. The photocatalyst dispersion liquid after irradiation had a pH value of 4.5.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.132 h⁻¹.

### (Example 4)

A photocatalyst dispersion liquid was obtained by a similar process to that of Example 2 except the use amount of the aqueous solution of hexachloro platinic acid (H₂PtCl₆) was 0.1 parts by mass in terms of the platinum atom with respect to 100 parts by mass of the total use amount of the titanium oxide particles and the tungsten oxide particles. An amount of the solid part (a total amount of the titanium oxide particles and the tungsten oxide particles) in 100 parts by mass of the photocatalyst dispersion liquid was 5 parts by mass (having a solid part concentration of 5% by mass).

When the photocatalyst dispersion liquid was stored at 20°C for 3 hours, no solid-liquid separation was observed during the storage.

Furthermore, 30 g of the photocatalyst dispersion liquid was transferred to a 100 mL beaker and irradiated by a similar process to that of Example 2, thus reducing hexachloro platinic acid in the photocatalyst dispersion liquid to platinum to obtain a photocatalyst dispersion liquid. The photocatalyst dispersion liquid after irradiation had a pH value of 4.3.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.128 h⁻¹.

### (Example 5)

A photocatalyst dispersion liquid was obtained by a similar process to that of Example 2 except an aqueous solution of hydrogen tetrachloroaurate (HAuCl₄) was used instead of the hexachloro platinic acid (H₂PtCl₆) aqueous solution so that the use amount was 0.03 parts by mass in terms of the gold atom with respect to 100 parts by mass of the total use amount of the titanium oxide particles and the tungsten oxide particles. An amount of the solid part (a total amount of the titanium oxide particles and the tungsten oxide particles) in 100 parts by mass of the photocatalyst dispersion liquid was 5 parts by mass (having a solid part concentration of 5% by mass).

When the photocatalyst dispersion liquid was stored at 20°C for 3 hours, no solid-liquid separation was observed during the storage.

Furthermore, 30 g of the photocatalyst dispersion liquid was transferred to a 100 mL beaker and irradiated by a similar process to that of Example 2, thus reducing tetrachloroaurate in the photocatalyst dispersion liquid to gold to obtain a photocatalyst dispersion liquid. The photocatalyst dispersion liquid after irradiation had a pH value of 4.1.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.109 h⁻¹.

### (Example 6)

A hexachloro platinic acid-containing tungsten oxide particle dispersion liquid was obtained by adding an aqueous solution of hexachloro platinic acid (H₂PtCl₆) to the tungsten oxide particle dispersion liquid obtained in Production Example 2 so that the use amount of hexachloro platinic acid was 0.03 parts by mass in terms of the platinum atom with respect to 100 parts by mass of the use amount of the tungsten oxide particles, and adding methanol so that the concentration was 6.5% by mass with respect to the entire solvent. An amount of the solid part (an amount of the tungsten oxide particles) in 100 parts by mass of the dispersion liquid was 3.3 parts by mass (having a solid part concentration of 3.3% by mass).

When the dispersion liquid was stored at 20°C for 3 hours, no solid-liquid separation was observed during the storage.

Next, 22.5 g of the hexachloro platinic acid-containing tungsten oxide particle dispersion liquid was transferred to a 100 mL beaker and irradiated by a similar process to that of Example 2, thus reducing hexachloro platinic acid in the dispersion liquid to platinum to obtain a platinum-containing tungsten oxide particle dispersion liquid.

When the dispersion liquid was stored at 20°C for 3 hours, no solid-liquid separation was observed during the storage.

Next, a photocatalyst dispersion liquid was obtained by mixing the platinum-containing tungsten oxide particle dispersion liquid and the titanium oxide particle dispersion liquid obtained in Production Example 1 so that the use amount ratio of the titanium oxide particles and the tungsten oxide particles was to be 1:1 (at mass ratio) (thus the containing amount of platinum in the dispersion liquid became 0.015 parts by mass in terms of the platinum atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.6.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.131 h⁻¹.

### (Example 7)

A hexachloro platinic acid-containing tungsten oxide particle dispersion liquid was obtained by a similar process to that of Example 6 except the use amount of the hexachloro platinic acid (H₂PtCl₆) aqueous solution was 0.06 parts by mass in terms of the platinum atom with respect to 100 parts by mass of the use amount of the tungsten oxide particles. An amount of the solid part (an amount of the tungsten oxide particles) in 100 parts by mass of the dispersion liquid was 5 parts by mass (having a solid part concentration of 5% by mass).

When the dispersion liquid was stored at 20°C for 3 hours, no solid-liquid separation was observed during the storage.

Next, 22.5 g of the hexachloro platinic acid-containing tungsten oxide particle dispersion liquid was transferred to a 100 mL beaker and irradiated by a similar process to that of Example 2, thus reducing hexachloro platinic acid in the dispersion liquid to platinum to obtain a platinum-containing tungsten oxide particle dispersion liquid.

When the dispersion liquid was stored at 20°C for 3 hours, no solid-liquid separation was observed during the storage.

Next, a photocatalyst dispersion liquid was obtained by mixing the platinum-containing tungsten oxide particle dispersion liquid with the titanium oxide particle dispersion liquid obtained in Production Example 1 so that the use amount ratio of the titanium oxide particles and the tungsten oxide particles was to be 1:1 (at mass ratio) (thus the containing amount of platinum in the dispersion liquid became 0.03 parts by mass in terms of the platinum atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.6.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.125 h⁻¹.

### (Example 8)

A hexachloro platinic acid-containing tungsten oxide particle dispersion liquid was obtained by a similar process to that of Example 6 except the use amount of the aqueous solution of hexachloro platinic acid (H₂PtCl₆) was 0.12 parts by mass in terms of the platinum atom with respect to 100 parts by mass of the use amount of the tungsten oxide particles. An amount of the solid part (an amount of the tungsten oxide particles) in 100 parts by mass of the dispersion liquid was 5 parts by mass (having a solid part concentration of 5% by mass).

When the dispersion liquid was stored at 20°C for 3 hours, no solid-liquid separation was observed during the storage.

Next, 22.5 g of the hexachloro platinic acid-containing tungsten oxide particle dispersion liquid was transferred to a 100 mL beaker and irradiated by a similar process to that of Example 2, thus reducing hexachloro platinic acid in the dispersion liquid to platinum to obtain a platinum-containing tungsten oxide particle dispersion liquid.

When the dispersion liquid was stored at 20°C for 3 hours, no solid-liquid separation was observed during the storage.

Next, a photocatalyst dispersion liquid was obtained by mixing the platinum-containing tungsten oxide particle dispersion liquid with the titanium oxide particle dispersion liquid obtained in Production Example 1 so that the use amount ratio of the titanium oxide particles and the tungsten oxide particles was to be 1:1 (at mass ratio) (thus the containing amount of platinum in the dispersion liquid became 0.06 parts by mass in terms of the platinum atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.5.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.114 h⁻¹.

### (Example 9)

A hexachloro platinic acid-containing tungsten oxide particle dispersion liquid was obtainèd by a similar process to that of Example 6 except the use amount of the hexachloro platinic acid (H₂PtCl₆) aqueous solution was 0.2 parts by mass in terms of the platinum atom with respect to 100 parts by mass of the use amount of the tungsten oxide particles. An amount of the solid part (an amount of the tungsten oxide particles) in 100 parts by mass of the dispersion liquid was 5 parts by mass (having a solid part concentration of 5% by mass).

When the dispersion liquid was stored at 20°C for 3 hours, no solid-liquid separation was observed during the storage.

Next, 22.5 g of the hexachloro platinic acid-containing tungsten oxide particle dispersion liquid was transferred to a 100 mL beaker and irradiated by a similar process to that of Example 2, thus reducing hexachloro platinic acid in the dispersion liquid to platinum to obtain a platinum-containing tungsten oxide particle dispersion liquid.

When the dispersion liquid was stored at 20°C for 3 hours, no solid-liquid separation was observed during the storage.

Next, a photocatalyst dispersion liquid was obtained by mixing the platinum-containing tungsten oxide particle dispersion liquid with the titanium oxide particle dispersion liquid obtained in Production Example 1 so that the use amount ratio of the titanium oxide particles and the tungsten oxide particles was to be 1:1 (at mass ratio) (thus the containing amount of platinum in the dispersion liquid became 0.1 parts by mass in terms of the platinum atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.3.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.120 h⁻¹.

### (Example 10)

A hydrogen tetrachloroaurate-containing tungsten oxide particle dispersion liquid was obtained by adding an aqueous solution of hydrogen tetrachloroaurate (HAuCl₄) to the tungsten oxide particle dispersion liquid obtained in Production Example 2 so that the use amount of hydrogen tetrachloroaurate was 0.03 parts by mass in terms of the gold atom with respect to 100 parts by mass of the use amount of the tungsten oxide particles, and adding methanol so that the concentration was 6.5% by mass with respect to the entire solvent. An amount of the solid part (an amount of the tungsten oxide particles) in 100 parts by mass of the dispersion liquid was 3.3 parts by mass (having a solid part concentration of 3.3% by mass).

When the dispersion liquid was stored at 20°C for 3 hours, no solid-liquid separation was observed during the storage.

Next, 22.5 g of the hydrogen tetrachloroaurate-containing tungsten oxide particle dispersion liquid was transferred to a 100 mL beaker and irradiated by a similar process to that of Example 2, thus reducing hydrogen tetrachloroaurate in the dispersion liquid to gold to obtain a gold-containing tungsten oxide particle dispersion liquid.

When the dispersion liquid was stored at 20°C for 3 hours, no solid-liquid separation was observed during the storage.

Next, a photocatalyst dispersion liquid was obtained by mixing the gold-containing tungsten oxide particle dispersion liquid with the titanium oxide particle dispersion liquid obtained in Production Example 1 so that the use amount ratio of the titanium oxide particles and the tungsten oxide particles was to be 1:1 (at mass ratio) (thus the containing amount of gold in the dispersion liquid became 0.015 parts by mass in terms of the gold atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.5.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.106 h⁻¹.

### (Example 11)

A hydrogen tetrachloroaurate-containing tungsten oxide particle dispersion liquid was obtained by a similar process to that of Example 10 except the use amount of the hydrogen tetrachloroaurate (HAuCl₄) aqueous solution was 0.12 parts by mass in terms the gold atom with respect to 100 parts by mass of the use amount of the tungsten oxide particles. An amount of the solid part (an amount of the tungsten oxide particles) in 100 parts by mass of the dispersion liquid was 5 parts by mass (having a solid part concentration of 5% by mass).

When the dispersion liquid was stored at 20°C for 3 hours, no solid-liquid separation was observed during the storage.

Next, 22.5 g of the hydrogen tetrachloroaurate-containing tungsten oxide particle dispersion liquid was transferred to a 100 mL beaker and irradiated by a similar process to that of Example 2, thus reducing hydrogen tetrachloroaurate in the dispersion liquid to gold to obtain a gold-containing tungsten oxide particle dispersion liquid.

When the dispersion liquid was stored at 20°C for 3 hours, no solid-liquid separation was observed during the storage.

Next, a photocatalyst dispersion liquid was obtained by mixing the gold-containing tungsten oxide particle dispersion liquid with the titanium oxide particle dispersion liquid obtained in Production Example 1 were mixed so that the use amount ratio of the titanium oxide particles and the tungsten oxide particles was to be 1:1 (at mass ratio) (thus the containing amount of gold in the dispersion liquid became 0.06 parts by mass in terms of the gold atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.5.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.141 h⁻¹.

### (Example 12)

A hydrogen tetrachloroaurate-containing tungsten oxide particle dispersion liquid was obtained by a similar process to that of Example 10 except the use amount of the aqueous solution of hydrogen tetrachloroaurate (HAuCl₄) was 0.2 parts by mass in terms the gold atom with respect to 100 parts by mass of the use amount of the tungsten oxide particles. An amount of the solid part (an amount of the tungsten oxide particles) in 100 parts by mass of the dispersion liquid was 5 parts by mass (having a solid part concentration of 5% by mass).

When the dispersion liquid was stored at 20°C for 3 hours, no solid-liquid separation was observed during the storage.

Next, 22.5 g of the hydrogen tetrachloroaurate-containing tungsten oxide particle dispersion liquid was transferred to a 100 mL beaker and irradiated by a similar process to that of Example 2, thus reducing hydrogen tetrachloroaurate in the dispersion liquid to gold to obtain a gold-containing tungsten oxide particle dispersion liquid.

When the dispersion liquid was stored at 20°C for 3 hours, no solid-liquid separation was observed during the storage.

Next, a photocatalyst dispersion liquid was obtained by mixing the gold-containing tungsten oxide particle dispersion liquid with the titanium oxide particle dispersion liquid obtained in Production Example 1 were mixed so that the use amount ratio of the titanium oxide particles and the tungsten oxide particles was to be 1:1 (at mass ratio) (thus the containing amount of gold in the dispersion liquid became 0.1 parts by mass in terms of the gold atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 4.4.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.146 h⁻¹.

### (Production Example 3 - Preparing of titanium oxide particle dispersion liquid)

An ammonium dihydrogen phosphate aqueous solution obtained by dissolving 0.086 g of ammonium dihydrogen phosphate (Wako analytical grade reagent) in 47.1 g of water was mixed with 12.82 g of a meta-titanic acid solid cake (containing a titanium component of 46.8% by mass in terms of TiO₂) obtained by hydrolyzing a titanyl sulfate aqueous solution with heating. At this time, the amount of ammonium dihydrogen phosphate was 0.01 mol with respect to 1 mol of meta-titanic acid. A titanium oxide particle dispersion liquid was obtained by subjecting the mixture to a dispersion treatment under the following conditions using a medium stirring type dispersing device ("4TSG-1/8" produced by Aimex Co., Ltd.).

Dispersion medium: 190 g beads made of zirconia having an outer diameter of 0.05 mm
Treating temperature: 20°C
Treating time: 1 hour
Rotating rate: 2,000 rpm

The average dispersed particle diameter of the titanium oxide particles in the titanium oxide particle dispersion liquid was 92 nm and the titanium oxide particle dispersion liquid had a pH value of 7.8. When the X-ray diffraction spectra of the mixture before the dispersing treatment and the solid part of the titanium oxide particle dispersion liquid after the dispersing treatment were measured and compared, both the crystal structures were anatase, and the change of the crystal structure due to the dispersing treatment was not observed.

### (Production Example 4 - Preparing of tungsten oxide particle dispersion liquid)

A mixture was obtained by adding 1 kg of tungsten oxide particles (produced by NIPPON INORGANIC COLOUR & CHEMICAL CO., LTD.) serving as a particle-like photocatalyst to 4 kg of ion-exchanged water, followed by mixing. A tungsten oxide particle dispersion liquid was obtained by subjecting the mixture to a dispersing treatment under the following conditions using a medium stirring type dispersing device ("ULTRAAPEX MILL UAM-1" produced by Kotobuki Engineering & Manufacturing Co., Ltd.).

Dispersion medium: 1.85 kg beads made of zirconia having an outer diameter of 0.05 mm
Stirring rate: 12.6 m/sec. at a circumferential speed
Flowing rate: 0.25 L/min
Total treating time: about 50 minutes

The average dispersed particle diameter of the tungsten oxide particles in the tungsten oxide particle dispersion liquid was 118 nm. A solid part was obtained by vacuum-drying a part of this dispersion liquid, and the BET specific surface area of this solid part was 40 m²/g. In addition, when the X-ray diffraction spectra of the mixture before the dispersing treatment and the solid part of the titanium oxide dispersion liquid after the dispersing treatment were measured and compared, both the crystal structures were WO₃, and the change of the crystal structure due to the dispersing treatment was not observed. When the dispersion liquid was stored at 20°C for 3 hours, no solid-liquid separation was observed during the storage.

### (Example 13)

A hexachloro platinic acid-containing tungsten oxide particle dispersion liquid was obtained by adding an aqueous solution of hexachloro platinic acid (H₂PtCl₆) to the tungsten oxide particle dispersion liquid obtained in Production Example 4 so that the use amount of hexachloro platinic acid was 0.12 parts by mass in terms of the platinum atom with respect to 100 parts by mass of the total use amount of the titanium oxide particles and the tungsten oxide particles, and adding methanol so that the concentration was 6.25% by mass with respect to the entire solvent. An amount of the solid part (an amount of the tungsten oxide particles) in 100 parts by mass of the dispersion liquid was 11.4 parts by mass (having a solid part concentration of 11.4% by mass).

Next, 480 g of the hexachloro platinic acid-containing tungsten oxide particle dispersion liquid was transferred to a 1 L beaker and irradiated with an ultraviolet light for 3 hours by a high pressure mercury lamp (produced by Ushio Inc., a high pressure mercury lamp "UM-102", an ultrahigh pressure mercury lamp: "UM-103B-B") while stirring, thus reducing hexachloro platinic acid in the dispersion liquid to platinum to obtain a platinum-containing tungsten oxide particle dispersion liquid. The photocatalyst dispersion liquid after irradiation of the ultraviolet light had a pH value of 2.4.

When the dispersion liquid was stored at 20°C for 3 hours, no solid-liquid separation was observed during the storage.

Next, a photocatalyst dispersion liquid was obtained by mixing the platinum-containing tungsten oxide particle dispersion liquid with the titanium oxide particle dispersion liquid obtained in Production Example 3 so that the use amount ratio of the titanium oxide particles and the tungsten oxide particles was to be 1:1 (at mass ratio) (thus the containing amount of platinum in the dispersion liquid became 0.06 parts by mass in terms of the platinum atom with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 3.6.

When the photocatalyst dispersion liquid was stored at 20°C for 3 hours, no solid-liquid separation was observed during the storage. When the photocatalytic activity (decomposition of acetaldehyde) of the photocatalyst layer formed using the photocatalyst dispersion liquid was evaluated, the first-order rate constant was 0.182 h⁻¹.

### (Example 14)

When the photocatalytic activity (decomposition of formaldehyde) of the photocatalyst layer formed using the photocatalyst dispersion liquid obtained in Production Example 4 was evaluated, the first-order rate constant was 0.644 h⁻¹.

### (Example 15)

A hexachloro platinic acid-containing tungsten oxide particle dispersion liquid was obtained by adding an aqueous solution of hexachloro platinic acid (H₂PtCl₆) to the tungsten oxide particle dispersion liquid obtained in Production Example 4 so that the use amount of hexachloro platinic acid was 0.096 parts by mass in terms of the platinum atom with respect to 100 parts by mass of the use amount of the tungsten oxide particles, and adding methanol was added so that the concentration was 1.1% by mass with respect to the entire solvent. An amount of the solid part (an amount of the tungsten oxide particles) in 100 parts by mass of the dispersion liquid was adjusted to 10.2 parts by mass (having a solid part concentration of 10.2 by mass) by adding water.

Next, 30 g of the hexachloro platinic acid-containing tungsten oxide particle dispersion liquid was transferred to a 100 mL beaker and irradiated with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing hexachloro platinic acid in the dispersion liquid to platinum to obtain a platinum-containing tungsten oxide particle dispersion liquid.

Next, a tungsten oxide particle dispersion liquid containing palladium and platinum was obtained by adding a hydrochloric acid aqueous solution of palladium chloride (PdCl₂) (obtained by dissolving 0.252 g of PdCl₂ powders in an aqueous solution composed of 9.41 g of a hydrochloric acid aqueous solution having a concentration of 1 mol/L and 90.43 g of water) to the platinum-containing tungsten oxide particle dispersion liquid so that the use amount of palladium chloride was 0.024 parts by mass in terms of the palladium atom with respect to100 parts by mass of the use amount of the tungsten oxide particles, and irradiating with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing palladium chloride in the dispersion liquid to palladium. An amount of the solid part (a total amount with the tungsten oxide particles) in 100 parts by mass of the photocatalyst dispersion liquid was 10.0 parts by mass (having a solid part concentration of 10.0% by mass). The photocatalyst dispersion liquid after irradiation of the ultraviolet light had a pH value of 2.2.

Next, a photocatalyst dispersion solution was obtained by mixing the tungsten oxide particle dispersion liquid containing palladium and platinum with the titanium oxide particle dispersion liquid obtained in Production Example 3 so that the use amount ratio of the titanium oxide particles and the tungsten oxide particles was to be 1:1 (at mass ratio) (thus the containing amounts of platinum and palladium in the dispersion liquid became 0.048 parts by mass in terms of the platinum atom and 0.012 parts by mass in terms of the palladium atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 3.9.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 1.05 h⁻¹.

### (Example 16)

An aqueous solution of hexachloro platinic acid (H₂PtCl₆) was added to the tungsten oxide particle dispersion liquid obtained in Production Example 4 so that the use amount of hexachloro platinic acid was 0.096 parts by mass in terms of the platinum atom with respect to 100 parts by mass of the use amount of the tungsten oxide particles, and then the hydrochloric acid aqueous solution of palladium chloride (PdCl₂) of Example 15 was added so that the use amount of palladium chloride was 0.024 parts by mass in terms of the palladium atom with respect to 100 parts by mass of the use amount of the tungsten oxide particles. Furthermore, methanol was added so that the concentration was 1.1% by mass with respect to the entire solvent to obtain a tungsten oxide particle dispersion liquid containing hexachloro platinic acid and palladium chloride. An amount of the solid part (an amount of the tungsten oxide particles) in 100 parts by mass of the dispersion liquid was adjusted to 10.0 parts by mass (having a solid part concentration of 10.0 by mass) by adding water.

Next, 30 g of the tungsten oxide particle dispersion liquid containing hexachloro platinic acid and palladium chloride was transferred to a 100 mL beaker and irradiated with an ultraviolet light for 1 hour by a high pressure mercury lamp (produced by Ushio Inc., a high pressure mercury lamp "UM-102", an ultrahigh pressure mercury lamp: "UM-103B-B") while stirring, thus in the dispersion liquid, reducing hexachloro platinic acid to platinum and reducing palladium chloride to palladium to obtain a tungsten oxide particle dispersion liquid containing platinum and palladium. The photocatalyst dispersion liquid after irradiation had a pH value of 2.3.

Next, a photocatalyst dispersion liquid was obtained by mixing the tungsten oxide particle dispersion liquid containing platinum and palladium with the titanium oxide particle dispersion liquid obtained in Production Example 3 so that the use amount ratio of the titanium oxide particles and the tungsten oxide particles was to be 1:1 (at mass ratio) (thus the containing amounts of platinum and palladium in the dispersion liquid became 0.048 parts by mass in terms of the platinum atom and 0.012 parts by mass in terms of the palladium atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was 5 parts by mass (having a solid part concentration of 5% by mass) and the photocatalyst dispersion liquid had a pH value of 3.9.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 0.959 h⁻¹.

### (Example 17)

A hexachloro platinic acid-containing tungsten oxide particle dispersion liquid was obtained by adding an aqueous solution of hexachloro platinic acid (H₂PtCl₆) to the tungsten oxide particle dispersion liquid obtained in Production Example 4 so that the use amount of hexachloro platinic acid was 0.048 parts by mass in terms of the platinum atom with respect to 100 parts by mass of the use amount of the tungsten oxide particles, and adding methanol so that the concentration was 1.1% by mass with respect to the entire solvent. An amount of the solid part (an amount of the tungsten oxide particles) in 100 parts by mass of the dispersion liquid was adjusted to 10.5 parts by mass (having a solid part concentration of 10.5 by mass) by adding water.

Next, 30 g of the hexachloro platinic acid-containing tungsten oxide particle dispersion was transferred to a 100 mL beaker and irradiated with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing hexachloro platinic acid in the dispersion liquid to platinum to obtain a platinum-containing tungsten oxide particle dispersion liquid.

Next, a tungsten oxide particle dispersion liquid containing palladium and platinum was obtained by adding the hydrochloric acid aqueous solution of palladium chloride (PdCl₂) used in Example 15 to the platinum-containing tungsten oxide particle dispersion liquid so that the use amount of palladium chloride was 0.072 parts by mass in terms of the palladium atom with respect to 100 parts by mass of the use amount of the tungsten oxide particles, and irradiating with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing palladium chloride in the dispersion liquid to palladium. An amount of the solid part (a total amount of the titanium oxide particles and the tungsten oxide particles) in 100 parts by mass of the photocatalyst dispersion liquid was 10.0 parts by mass (having a solid part concentration of 10.0% by mass), and the photocatalyst dispersion liquid had a pH value of 2.0.

Next, a photocatalyst dispersion liquid was obtained by mixing the tungsten oxide particle dispersion liquid containing palladium and platinum with the titanium oxide particle dispersion liquid obtained in Production Example 3 so that the use amount ratio of the titanium oxide particles and the tungsten oxide particles was to be 1:1 (at mass ratio) (thus the containing amounts of platinum and palladium in the dispersion liquid became 0.024 parts by mass in terms of the platinum atom and 0.036 parts by mass in terms of the palladium atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) and the photocatalyst dispersion liquid had a pH value of 3.8.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 0.976 h⁻¹.

### (Example 18)

A hexachloro platinic acid-containing tungsten oxide particle dispersion liquid was obtained by adding an aqueous solution of hexachloro platinic acid (H₂PtCl₆) to the tungsten oxide particle dispersion liquid obtained in Production Example 4 so that the use amount of hexachloro platinic acid was 0.024 parts by mass in terms of the platinum atom with respect to 100 parts by mass of the use amount of the tungsten oxide particles, and adding methanol so that the concentration was 1.1% by mass with respect to the entire solvent. An amount of the solid part (an amount of the tungsten oxide particles) in 100 parts by mass of the dispersion liquid was adjusted to 10.7 parts by mass (having a solid part concentration of 10.7 by mass) by adding water.

Next, 30 g of the hexachloro platinic acid-containing tungsten oxide particle dispersion was transferred to a 100 mL beaker and irradiated with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing hexachloro platinic acid in the dispersion liquid to platinum to obtain a platinum-containing tungsten oxide particle dispersion liquid.

Next, a tungsten oxide particle dispersion liquid containing palladium and platinum was obtained by adding the hydrochloric acid aqueous solution of palladium chloride (PdCl₂) used in Example 15 to the platinum-containing tungsten oxide particle dispersion liquid so that the use amount of palladium chloride was 0.096 parts by mass in terms of the palladium atom with respect to 100 parts by mass of the use amount of the tungsten oxide particles, and irradiating with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing palladium chloride in the dispersion liquid to palladium. The photocatalyst dispersion liquid after irradiation had a pH value of 2.0. An amount of the solid part (a total amount of the titanium oxide particles and the tungsten oxide particles) in 100 parts by mass of the dispersion liquid was 10.0 parts by mass (having a solid part concentration of 10.0% by mass).

Next, a photocatalyst dispersion liquid was obtained by mixing the tungsten oxide particle dispersion liquid containing palladium and platinum with the titanium oxide particle dispersion liquid obtained in Production Example 3 so that the use amount ratio of the titanium oxide particles and the tungsten oxide particles was to be 1:1 (at mass ratio) (thus the containing amounts of platinum and palladium in the dispersion liquid became 0.012 parts by mass in terms of the platinum atom and 0.048 parts by mass in terms of the palladium atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) and the photocatalyst dispersion liquid had a pH value of 3.7.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 0.982 h⁻¹.

### (Example 19)

A palladium chloride-containing titanium oxide particle dispersion liquid was obtained by adding the hydrochloric acid aqueous solution of palladium chloride (PdCl₂) used in Example 15 to the titanium oxide particle dispersion liquid obtained in Production Example 3 so that the use amount of palladium chloride was 0.12 parts by mass in terms of the palladium atom with respect to 100 parts by mass of the use amount of the titanium oxide particles, and adding methanol so that the concentration was 1.1% by mass with respect to the entire solvent. An amount of the solid part (an amount of the titanium oxide particles) in 100 parts by mass of the dispersion liquid was adjusted to 5 parts by mass (having a solid part concentration of 5% by mass) by adding water.

Next, 30 g of the palladium chloride-containing titanium oxide particle dispersion liquid was transferred to a 100 mL beaker and irradiated with an ultraviolet light for 1 hour by a high pressure mercury lamp (produced by Ushio Inc., a high pressure mercury lamp "UM-102", an ultrahigh pressure mercury lamp: "UM-103B-B") while stirring, thus reducing palladium chloride in the dispersion liquid to palladium to obtain a palladium-containing titanium oxide particle dispersion liquid. The photocatalyst dispersion liquid after irradiation had a pH value of 7.3.

Next, a photocatalyst dispersion liquid was obtained by mixing the palladium-containing titanium oxide particle dispersion liquid with the platinum-containing tungsten oxide particle dispersion liquid obtained in Example 13 so that the use amount ratio of the titanium oxide particles and the tungsten oxide particles was to be 1:1 (at mass ratio) (thus the containing amounts of palladium and platinum in the dispersion liquid became 0.06 parts by mass in terms of the palladium atom and 0.06 parts by mass in terms of the platinum atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) by adding water, and the photocatalyst dispersion liquid had a pH value of 3.8.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 1.08 h⁻¹.

### (Example 20)

A photocatalyst dispersion liquid was obtained by mixing the palladium-containing titanium oxide particle dispersion liquid obtained in Example 19 with the platinum-containing tungsten oxide particle dispersion liquid obtained in Example 13 so that the use amount ratio of the titanium oxide particles and the tungsten oxide particles was to be 3:1 (at mass ratio) (thus the containing amounts of palladium and platinum in the dispersion liquid became 0.09 parts by mass in terms of the palladium atom and 0.03 parts by mass in terms of the platinum atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) by adding water, and the photocatalyst dispersion liquid had a pH value of 4.5.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 1.79 h⁻¹.

### (Example 21)

A palladium chloride-containing titanium oxide particle dispersion liquid was obtained by adding the hydrochloric acid aqueous solution of palladium chloride (PdCl₂) used in Example 15 to the titanium oxide particle dispersion liquid obtained in Production Example 3 so that the use amount of palladium chloride was 0.06 parts by mass in terms of the palladium atom with respect to 100 parts by mass of the use amount of the titanium oxide particles, and adding methanol so that the concentration was 1.1% by mass with respect to the entire solvent. An amount of the solid part (an amount of the titanium oxide particles) in 100 parts by mass of the dispersion liquid was adjusted to 5 parts by mass (having a solid part concentration of 5 by mass) by adding water.

Next, 30 g of the palladium chloride-containing titanium oxide particle dispersion liquid was transferred to a 100 mL beaker and irradiated with an ultraviolet light for 1 hour by a high pressure mercury lamp (produced by Ushio Inc., a high pressure mercury lamp "UM-102", an ultrahigh pressure mercury lamp: "UM-103B-B") while stirring, thus reducing palladium chloride in the dispersion liquid to palladium to obtain a palladium-containing titanium oxide particle dispersion liquid. The photocatalyst dispersion liquid after irradiation had a pH value of 7.8.

Next, a photocatalyst dispersion liquid was obtained by mixing the palladium-containing titanium oxide particle dispersion liquid with the platinum-containing tungsten oxide particle dispersion liquid obtained in Example 13 so that the use amount ratio of the titanium oxide particles and the tungsten oxide particles was to be 1:1 (at mass ratio) (thus the containing amounts of palladium and platinum in the dispersion liquid became 0.03 parts by mass in terms of the palladium atom and 0.06 parts by mass in terms of the platinum atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) by adding water, and the photocatalyst dispersion liquid had a pH value of 4.0.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 0.901 h⁻¹.

### (Example 22)

A photocatalyst dispersion liquid was obtained by mixing the palladium-containing titanium oxide particle dispersion liquid obtained in Example 19 with the platinum-containing tungsten oxide particle dispersion liquid obtained in Example 13 so that the use amount ratio of the titanium oxide particles and the tungsten oxide particles was to be 3:1 (at mass ratio) (thus the containing amounts of palladium and platinum in the dispersion liquid became 0.045 parts by mass in terms of the palladium atom and 0.03 parts by mass in terms of the platinum atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) by adding water, and the photocatalyst dispersion liquid had a pH value of 4.8.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 0.978 h⁻¹.

### (Example 23)

A hydrogen tetrachloroaurate-containing titanium oxide particle dispersion liquid was obtained by adding an aqueous solution of hydrogen tetrachloroaurate (HAuCl₄) to the titanium oxide particle dispersion liquid obtained in Production Example 3 so that the use amount of hydrogen tetrachloroaurate was 0.06 parts by mass in terms of the gold atom with respect to 100 parts by mass of the use amount of the titanium oxide particles, and adding methanol so that the concentration was 1.1% by mass with respect to the entire solvent. An amount of the solid part (an amount of the titanium oxide particles) in 100 parts by mass of the dispersion liquid was 5.1 parts by mass (having a solid part concentration of 5.1% by mass).

Next, 30 g of the hydrogen tetrachloroaurate-containing titanium oxide particle dispersion liquid was transferred to a 100 mL beaker and irradiated with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing hydrogen tetrachloroaurate in the dispersion liquid to gold to obtain a gold-containing titanium oxide particle dispersion liquid.

Next, a titanium oxide particle dispersion liquid containing palladium and gold was obtained by adding the hydrochloric acid aqueous solution of palladium chloride (PdCl₂) used in Example 15 to the gold-containing titanium oxide particle dispersion liquid so that the use amount of palladium chloride was 0.06 parts by mass in terms of the palladium atom with respect to 100 parts by mass of the use amount of the titanium oxide particles, and irradiating with an ultraviolet light for 30 minutes by a high pressure mercury lamp (produced by Ushio Inc., a high pressure mercury lamp "UM-102", an ultrahigh pressure mercury lamp: "UM-103B-B") while stirring, thus reducing palladium chloride in the dispersion liquid to palladium. The photocatalyst dispersion liquid after irradiation had a pH value of 7.7. When the obtained dispersion liquid was stored at 20°C for 3 hours, no solid-liquid separation was observed during the storage. An amount of the solid part (an amount of the titanium oxide particles) in 100 parts by mass of the dispersion liquid was 5.00 parts by mass (having a solid part concentration of 5.00% by mass).

Next, a photocatalyst dispersion liquid was obtained by mixing the titanium oxide particle dispersion liquid containing palladium and gold with the platinum-containing tungsten particle dispersion liquid obtained in Example 13 so that the use amount ratio of the titanium oxide particles and the tungsten oxide particles was to be 1:1 (at mass ratio) (thus the containing amounts of gold, palladium and platinum in the dispersion liquid became 0.03 parts by mass in terms of the gold atom and the palladium atom and 0.06 parts by mass in terms of the platinum atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) by adding water, and the photocatalyst dispersion liquid had a pH value of 4.2.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 1.20 h⁻¹.

### (Example 24)

A photocatalyst dispersion liquid was obtained by mixing the titanium oxide particle dispersion liquid containing palladium and gold obtained in Example 21 with the platinum-containing tungsten oxide particle dispersion liquid obtained in Example 13 so that the use amount ratio of the titanium oxide particles and the tungsten oxide particles was to be 3:1 (at mass ratio) (thus the containing amounts of gold, palladium and platinum in the dispersion liquid became 0.045 parts by mass in terms of the gold atom and the palladium atom and 0.03 parts by mass in terms of the platinum atom, with respect to 100 parts by mass of the total use amount of the titanium oxide particles and the tungsten oxide particles). An amount of the solid part (a total amount of the titanium oxide particles and the tungsten oxide particles) in 100 parts by mass of the photocatalyst dispersion liquid was adjusted to 5 parts by mass (having a solid part concentration of 5% by mass) by adding water, and the photocatalyst dispersion liquid had a pH value of 5.1.

When the photocatalyst dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 1.89 h⁻¹.

### (Example 25)

The titanium oxide particle dispersion liquid obtained in Production Example 3 and the tungsten oxide particle dispersion liquid obtained in Production Example 4 were mixed so that the use amount ratio of the titanium oxide particles and the tungsten oxide particles was to be 1:1 (at mass ratio). Next, a titanium oxide particle/tungsten oxide particle dispersion liquid containing hexachloro platinic acid and palladium chloride was obtained by adding an aqueous solution of hexachloro platinic acid (H₂PtCl₆) and the palladium chloride aqueous solution used in Example 15 to this dispersion liquid so that the containing amounts of hexachloro platinic acid and palladium chloride in the dispersion liquid became 0.048 parts by mass and 0.012 parts by mass in terms of the platinum atom and palladium atom, with respect to 100 parts by mass of the total use amount of the titanium oxide particles and the tungsten oxide particles.

A titanium oxide particle/tungsten oxide particle dispersion liquid was obtained by adding water to this dispersion liquid so as to adjust an amount of the solid part (a total amount of the titanium oxide particles and the tungsten oxide particles) in 100 parts by mass of the photocatalyst dispersion liquid to 5 parts by mass (having a solid part concentration of 5% by mass), and the dispersion liquid had a pH value of 3.8. When the dispersion liquid was stored at 20°C for 3 hours, no solid-liquid separation was observed during the storage. When the photocatalytic activity (decomposition of formaldehyde) of the photocatalyst layer formed using the photocatalyst dispersion liquid was evaluated, the first-order rate constant was 0.813 h⁻¹.

### (Reference Example 1)

When each photocatalyst dispersion liquid obtained in Examples 1 to 25 was coated and dried on a ceiling material, thus volatilizing a dispersion medium to form a photocatalyst layer on a surface, the volatile organic substance concentration of formaldehyde, acetaldehyde, acetone, toluene, or the like and the concentration of a malodorous substance in an internal space could be reduced by the light irradiation from an interior lighting, and pathogenic bacteria such as staphylococcus aureus, coliform bacillus, or the like could be killed.

### (Reference Example 2)

When each photocatalyst dispersion liquid obtained in Examples 1 to 25 was coated and dried on a tile, thus volatilizing a dispersion medium to form a photocatalyst layer on a surface, the volatile organic substance concentration of formaldehyde, acetaldehyde, toluene, acetone, or the like and the concentration of a malodorous substance in an internal space could be reduced by the light irradiation from an interior lighting, and pathogenic bacteria such as staphylococcus aureus, coliform bacillus or the like could be killed.

### (Reference Example 3)

When each photocatalyst dispersion liquid obtained in Examples 1 to 25 was coated and dried on a glass, thus volatilizing a dispersion medium to form a photocatalyst layer on a surface, the volatile organic substance concentration of formaldehyde, acetaldehyde, toluene, acetone, or the like and the concentration of a malodorous substance in an internal space could be reduced by the light irradiation from an interior lighting, and pathogenic bacteria such as staphylococcus aureus, coliform bacillus or the like could be killed.

### (Reference Example 4)

When each photocatalyst dispersion liquid obtained in Examples 1 to 25 was coated and dried on a wallpaper, thus volatilizing a dispersion medium to form a photocatalyst layer on a surface, the volatile organic substance concentration of formaldehyde, acetaldehyde, toluene, acetone, or the like and the concentration of a malodorous substance in an internal space could be reduced by the light irradiation from an interior lighting, and pathogenic bacteria such as staphylococcus aureus, coliform bacillus, or the like could be killed.

### (Reference Example 5)

When each photocatalyst dispersion liquid obtained in Examples 1 to 25 was coated and dried on a floor, thus volatilizing a dispersion medium to form a photocatalyst layer on a surface, the volatile organic substance concentration of formaldehyde, acetaldehyde, toluene, acetone, or the like and the concentration of a malodorous substance in an internal space could be reduced by the light irradiation from an interior lighting, and pathogenic bacteria such as staphylococcus aureus, coliform bacillus or the like could be killed.

### (Reference Example 6)

When each photocatalyst dispersion liquid obtained in Examples 1 to 25 was coated and dried on surfaces of automobile upholsteries such as an automobile instrument panel, an automobile sheet, an automobile ceiling material, and the like, thus volatilizing a dispersion medium to form a photocatalyst layer on a surface, the volatile organic substance concentration of formaldehyde, acetaldehyde, toluene, acetone or the like and the concentration of a malodorous substance in a space inside a vehicle could be reduced by the light irradiation from a lighting inside a vehicle, and pathogenic bacteria such as staphylococcus aureus, coliform bacillus and the like could be killed.

### (Reference Example 7)

When each photocatalyst dispersion liquid obtained in Examples 1 to 25 was coated and dried on a surface of an air conditioner, thus volatilizing a dispersion medium to form a photocatalyst layer on a surface, the volatile organic substance concentration of formaldehyde, acetaldehyde, toluene, acetone, or the like and the concentration of a malodorous substance in an internal space could be reduced by the light irradiation from an interior lighting, and pathogenic bacteria such as staphylococcus aureus, coliform bacillus, or the like could be killed.

### (Reference Example 8)

When each photocatalyst dispersion liquid obtained in Examples 1 to 25 was coated and dried on a refrigerator, thus volatilizing a dispersion medium to form a photocatalyst layer on a surface, the volatile organic substance concentration of ethylene, or the like and the concentration of a malodorous substance in the refrigerator could be reduced by the light irradiation from an interior lighting or a light source in the refrigerator, and pathogenic bacteria such as staphylococcus aureus, coliform bacillus, or the like could be killed.

## Claims

1. A photocatalyst dispersion liquid comprising titanium oxide particles, tungsten oxide particles, a phosphoric acid or salt thereof and a dispersion medium, wherein the molar amount of the phosphoric acid or salt thereof is from 0.001 to 0.2 times the molar amount of the titanium oxide particles.

2. A photocatalyst dispersion liquid according to claim 1, which further comprises an electron-withdrawing substance or a precursor thereof.

3. A photocatalyst dispersion liquid according to claim 2, wherein the electron-withdrawing substance or precursor thereof comprises one or more atoms of metal selected from Cu, Pt, Au, Pd, Ag, Fe, Nb, Ru, Ir, Rh and Co.

4. A photocatalyst dispersion liquid according to claim 2 or 3, wherein the amount of the electron-withdrawing substance or precursor thereof is from 0.005 parts to 0.6 parts by mass in terms of the metal atom with respect to 100 parts by mass of the total amount of the titanium oxide particles and the tungsten oxide particles.

5. A photocatalyst dispersion liquid according to any one of the preceding claims, wherein the phosphoric acid or salt thereof is selected from phosphoric acid, ammonium phosphate, sodium phosphate and potassium phosphate.

6. A photocatalyst dispersion liquid according to any one of the preceding claims, wherein (a) the average dispersed particle diameter of the titanium oxide particles is from 20 nm to 150 nm, or (b) the BET specific surface area of the titanium oxide particles is from 100 m²/g to 500 m²/g.

7. A photocatalyst dispersion liquid according to any one of the preceding claims, wherein (a) the average dispersed particle diameter of the tungsten oxide particles is from 50 nm to 200 nm, or (b) the BET specific surface area of the tungsten oxide particles is from 5 m²/g to 100 m²/g.

8. A photocatalyst dispersion liquid according to any one of the preceding claims, wherein (a) the mass ratio of the titanium oxide particles to the tungsten oxide particles is from 4:1 to 1:8, or (b) the mass of the dispersion medium is from 5 times to 200 times the total mass of the titanium oxide particles and the tungsten oxide particles.

9. A photocatalyst dispersion liquid according to any one of the preceding claims, having a pH value of 2.0 to 7.0.

10. A process for producing a photocatalyst dispersion liquid, the process comprising steps of:
dispersing titanium oxide particles in a dispersion medium having a phosphoric acid or salt thereof dissolved therein to obtain a titanium oxide particle dispersion liquid; and
mixing tungsten oxide particles in the titanium oxide particle dispersion liquid.

11. A process according to claim 10, wherein the tungsten oxide particles are dispersed in a dispersion medium to obtain a tungsten oxide particle dispersion liquid, and then the tungsten oxide particle dispersion liquid is mixed with the titanium oxide particle dispersion liquid.

12. A process according to claim 10, which further comprises a step of adding an electron-withdrawing substance or a precursor thereof.

13. A process according to claim 11, wherein an electron-withdrawing substance or a precursor thereof is added to the tungsten oxide particle dispersion liquid.

14. A process according to claim 12 or 13, which further comprises the step of light irradiation after the precursor of the electron-withdrawing substance is added, and preferably wherein the light irradiation is carried out before the tungsten oxide particles are mixed in the titanium oxide particle dispersion liquid.

15. A photocatalyst functional product comprising a photocatalyst layer on a surface, wherein the photocatalyst layer is formed using the photocatalyst dispersion liquid according to any one of claims 1 to 9.
